# EUROPEAN PATENT SPECIFICATION

(11) **EP 1 903 723 B1**
(45) Date of publication and mention of the grant of the patent: **29.06.2011**
(21) Application number: 06753130.1
(22) Date of filing: 10.07.2006
(51) Int. Cl.: H04L 12/56

(54) **METHOD AND APPARATUS FOR TRANSMITTING MESSAGE**
VERFAHREN ZUR PAKETWEITERLEITUNG UND GERÄT DAFÜR
MÉTHODE ET APPAREIL DE TRANSMISSION DE MESSAGE

(30) Priority: 18.07.2005 CN 200510035953
(43) Date of publication of application: 26.03.2008
(73) Proprietor: Huawei Technologies Co., Ltd., Longgang District, Shenzhen Guangdong 518129 (CN)
(72) Inventor: JIN, Tao, Shenzhen, Guangdong 518129 (CN)
(74) Representative: Reinhard - Skuhra - Weise & Partner GbR
(86) International application number: PCT/CN2006/001622
(87) International publication number: WO 2007/009349

(56) References cited:
- WO-A1-2004/114179
- CN-A- 1 183 788
- CN-A- 1 540 939
- US-A1- 2005 013 306
- US-A1- 2005 018 605
- US-A1- 2005 120 089
- RAAHEMI B ET AL: "METRO ETHERNET QUALITY OF SERVICES : A framework for quality of services in metro Ethernet networks: the essential functional blocks and handling of packets in the core and at the provider and customer edges" ALCATEL TELECOMMUNICATIONS REVIEW, ALCATEL, PARIS CEDEX, FR, 1 October 2004 (2004-10-01), XP007010175 ISSN: 1267-7167
- L. TANCEVSKI: "Ethernet Evolution towards Carrier Applications" OPTICAL FIBER COMMUNICATION CONFERENCE, [Online] vol. 5, 11 March 2005 (2005-03-11), pages 312-315, XP002480821 US ISBN: 1-55752-783-0 IEEE Retrieved from the Internet: URL:http://ieeexplore.ieee.org/iel5/9987/3 2092/01499759.pdf?tp=&isnumber=&arnumber=1 499759> [retrieved on 2008-05-20]

## Description

### Field of the Technology

The present invention relates to data communication technologies, more particularly to a method and an apparatus for forwarding a packet.

### Background of the Invention

Virtual Local Area Network (VLAN) is a booming technique, which divides equipment in a Local Area Network (LAN) not physically but logically into segments, and thereby implementing virtual working groups.

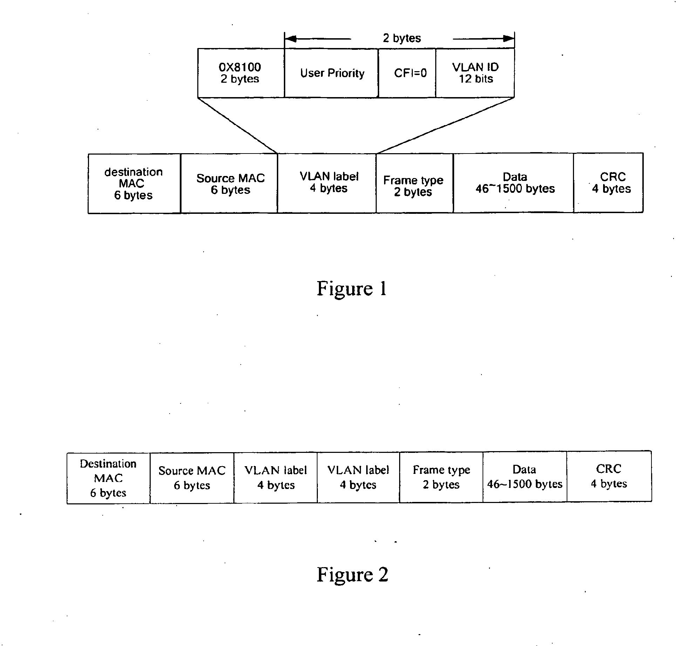

The IEEE 802.1Q standard draft defines a method for bearing several logical VLAN subnets on the same physical link. The IEEE 802.1Q adds four bytes into a standard IEEE802.3 Ethernet frame, wherein, the four bytes are called a Virtual Local. Area Network Tag (VLAN Tag), as shown in Figure 1, which is a schematic diagram illustrating a structure of a virtual Ethernet frame based on the IEEE802.1Q. In the definition of the virtual Ethernet frame structure shown in Figure 1, a VLAN Tag is inserted between a source Media Access Control (MAC) address and a frame type. The VLAN Tag contains a type field of value 0x8100, which occupies two bytes and is used for identifying the Ethernet frame as a frame of the VLAN structure. The VLAN Tag also contains VLAN Identifier (VLAN-ID), which occupies 12 bits and can support 4096 VLAN instances.

Recently, with the widespread applications of the VLAN, especially in Metropolitan Area Networks (MANs), each user will use one VLAN, which has made the 4096 VLAN instances defined in the virtual Ethernet frame structure become a bottleneck of the network development.

In order to solve the problem, a QinQ technique, i.e. 802.1Q in 802.1Q technique for expanding the VLAN ID number is provided. It also can be called a VLAN stack technique. The QinQ technique satisfies the demand of networks by increasing the number of the VLAN ID.

The QinQ technique adds a 4-bytes VLAN Tag into the existing 802.1Q frame, i.e., adds a 4 bytes VLAN Tag, which is completely the same as that in the 802.1Q, closely behind the VLAN Tag in the 802.1Q, as shown in figure 2. Under such a design concept and a scheme, the QinQ technique is completely compatible with all the characteristics of the original 802.1Q VLAN. Meanwhile, the added 12-bit VLAN ID makes the number of available VLAN IDs reach as high as 24 bits, therefore satisfying the demand for the VLAN ID under diversified circumstances.

In the related art, the QinQ technique is implemented as follows: a network device which supports the QinQ technique, such as a convergence switch, a router, a broadband access server, etc., receives an Ethernet packet with only one VLAN Tag sent by a user access device. It encapsulates another VLAN Tag into the packet according to a standard VLAN tagging technique, such as in-port number, or out-port number, before forwarding the packet to a backbone network.

The existing VLAN tagging techniques includes: port-based VLAN tagging techniques, MAC-based VLAN tagging techniques, network layer based VLAN tagging techniques and Internet Protocol (IP) multicast based VLAN tagging techniques.

Although the second VLAN Tag in the related art can provide a VLAN Tag number as long as 24 bits, the two VLAN tags contained in the Ethernet packet can only reflect physical features of the Ethernet packet, such as out-port information of the Ethernet packet, MAC address information, etc., while not reflecting service information corresponding to the Ethernet packet. Therefore, after the backbone network receives an Ethernet packet forwarded by the convergence switch, it cannot process the Ethernet packet according to corresponding service features of the Ethernet packet, and cannot implement service management and control in operations.

United States Patent Application US 2005/0018605 A1 provides a method for managing network traffic. A set of VLAN IDs is explicitly identified for use with a first service. Traffic that is identified as belonging to the first service is "extracted" from the default service and forwarded on a path that is related to the first service. The remaining traffic is forwarded on a path that is related to the default service.

### Summary of the Invention

The present invention provides a method for forwarding packet, so as to forward packet which carries a service feature, and it is possible for a network device in a backbone network to process the packet according to the service feature of the packet.

The present invention also provides an apparatus for forwarding packet, the apparatus makes it possible to forward packet, and the network device which received the packet can process the packet according to the service feature of the packet.

The technical scheme according to one aspect of the present invention is implemented as follows:

A method for forwarding a packet based on QinQ technique, includes:
configuring a corresponding relationship between a physical feature and a service feature of a packet;
receiving a packet encapsulated with the physical feature, and obtaining the physical feature of the packet;
finding the corresponding relationship between the physical feature and the service feature according to the obtained physical feature, and obtaining the service feature of the packet;
encapsulating the service feature of the packet into the packet, and forwarding the packet which has been encapsulated with the physical feature and the service feature, according to the QinQ technique,
wherein the physical feature of the packet is taken as a first Virtual Local Area Network, VLAN, tag of the packet, and the service feature is taken as a second VLAN tag of the packet; and the service feature comprises one of service type of the packet and service priority of the packet.

Meanwhile, according to another aspect of the present invention provides an apparatus for forwarding a packet based on QinQ technique, including a receiving unit and a transmitting unit; wherein,
the receiving unit, configured for receiving a packet encapsulated with a physical feature and obtaining the physical feature of the packet, and obtaining a service feature of the packet according to corresponding relationship between the physical feature and the service feature of the packet, and encapsulating the service feature of the packet into the packet, wherein the physical feature of the packet is taken as a first Virtual Local Area Network, VLAN, tag of the packet, and the service feature is taken as a second VLAN tag of the packet; the service feature comprises one of service type of the packet and service priority of the packet;
the transmitter unit, configured for transmitting a packet that has been encapsulated with the physical feature and the service feature according to the QinQ technique.

By setting a corresponding relationship between the physical feature and the service feature of a packet, the method and the apparatus according to embodiments of the present invention obtains the service feature of a packet according to the physical feature of the packet after receiving the packet, and further encapsulates the service feature into the packet, then forwards the packet carrying the service feature. The method and the apparatus make it possible for a network device to process a packet directly according to the service feature of the packet, which may improve the processing efficiency of the packet. In addition, the method and the apparatus implements differential services for users, which may decrease the cost for processing the packet during operation, and improve the service management and service control abilities during operation.

### Brief Description of the Drawings

Figure 1 is a schematic diagram illustrating a structure of an IEEE802.1Q-based virtual Ethernet frame;
Figure 2 is a schematic diagram illustrating a structure of a QinQ data frame;
Figure 3 is a basic flowchart in accordance with an embodiment of the present invention;
Figure 4 is a flowchart according to an embodiment of the present invention;
Figure 5 is a schematic diagram illustrating a frame structure with three layers of tags according to an embodiment of the present invention;
Figure 6 is a schematic diagram illustrating a frame structure with multiple layers of tags according to an embodiment of the present invention;
Figure 7 is a schematic diagram illustrating a structure of a forwarding apparatus according to an embodiment of the present invention.

### Detailed Description of the Invention

In order to make the technical solution and the advantages of the present invention clearer, the present invention will be described in detail hereinafter with reference to the accompanying drawings and embodiments.

In embodiments of the present invention, a corresponding relationship between the physical feature and the service feature of a packet is set. After receiving a packet, obtain the service feature according to the physical feature of the packet, and encapsulate the service feature into the packet.

Wherein, the physical feature of a packet includes: out-port number, MAC address, network address, IP multicast, or VLAN Tag. The service feature of a packet includes: service-related features, such as service type, or service priority, etc.

After the service feature corresponding to the packet is encapsulated into the packet, network devices can process the packet according to the service feature encapsulated in the packet.

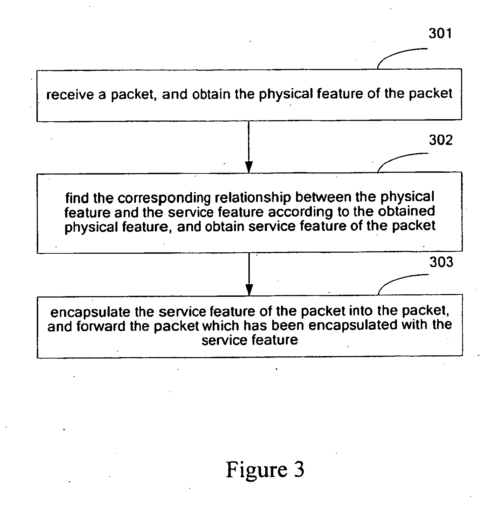

A basic flowchart according to an embodiment of the present invention is shown in Figure 3, including the following steps:
Step 301: receive a packet, and obtain the physical feature of the packet;
Step 302: find the corresponding relationship between the physical feature and the service feature according to the obtained physical feature, and obtain service feature of the packet;
Step 303: encapsulate the service feature of the packet into the packet, and forward the packet.

In the following embodiment, the first VLAN Tag of an Ethernet packet is taken as the physical feature of the Ethernet packet, and the second VLAN Tag is taken as the service feature of the Ethernet packet. Corresponding relationship between the first VLAN Tag and the second VLAN Tag of the Ethernet packet is set. The Ethernet packet will be shortened as packet hereinafter.

Wherein, the first VLAN Tag is the VLAN Tag defined by the 802.1Q. And the second VLAN Tag is: the second layer VLAN Tag encapsulated following the QinQ technique, and the second VLAN Tag can be encapsulated either in the inner layer or in the outer layer.

The corresponding relationship between the service feature, which is represented by the second VLAN Tag, and the first VLAN Tag is determined according to the requirements of practical operation circumstances and practical applications. Wherein, the corresponding relationship can be: the corresponding relationship between the service priority of the packet and the first VLAN Tag; or, the corresponding relationship between the service type of the packet and the first VLAN Tag, etc.

In this embodiment, the corresponding relationship between the second VLAN Tag and the first VLAN Tag is: the corresponding relationship between the service type of the packet and the VLAN identifier of the first VLAN Tag.

For example, under practical circumstances, if the value of the VLAN identifier carried in the VLAN Tag is between 1∼2K, it corresponds to Internet browse services. And the value between 2∼3K corresponds to SOHO services or commercial services, the value between 3∼4K corresponds to Voice over IP (VoIP) services or video services. Therefore, the corresponding relationship between the first VLAN Tag and the second VLAN Tag is: if the value of the VLAN identifier of the first VLAN Tag is between 1∼2K, the second VLAN Tag it corresponds is 1. And if the value is between 2∼3K, the second VLAN Tag it corresponds is 10, if the value is between 3∼4K, the second VLAN Tag it corresponds is 1000, etc. At this time, the value 1 of the second VLAN Tag represents Internet browse services; the value 10 of the second VLAN Tag represents SOHO services or commercial services; and the value 1000 of the second VLAN Tag represents VoIP services or video services.

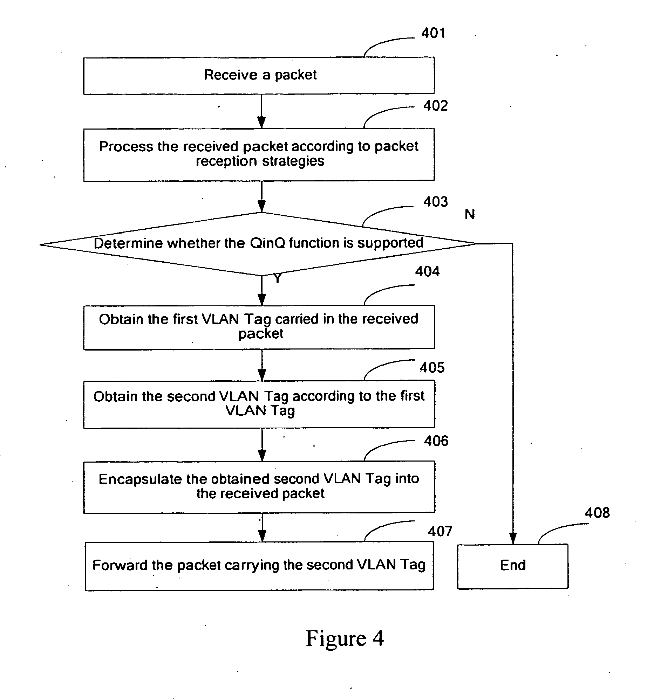

The present embodiment illustrates the procedure of a convergence switch receiving a packet which is sent by a user access device and forwarding the packet to a network device in the backbone network. The procedure is shown in Figure 4, which includes the following steps:
Step 401: a convergence switch receives a packet sent by a user access device.
Step 402: the convergence switch processes the received packet according to packet receiving strategies.

Wherein, the packet receiving strategies includes diversified security inspections and bandwidth control strategies.

Step 403: the convergence switch determines whether it supports the QinQ function, if it supports, goes to Step 404; otherwise, goes to Step 409.

Step 404: the convergence switch obtains the first VLAN Tag contained in the received packet.

Step 405: search the corresponding relationship between the first VLAN Tag and the second VLAN Tag, and obtain the second VLAN Tag according to the first VLAN Tag.

For example, when the value of the VLAN identifier of the first VLAN Tag is between 1∼2K, the corresponding second VLAN Tag is 1, which representing Internet browse services. When the value of the VLAN identifier of the first VLAN Tag is between 2∼3K, the corresponding second VLAN Tag is 10, which representing SOHO services or commercial services when the value of the VLAN identifier of the first VLAN Tag is between 3-4K, the corresponding second VLAN Tag is 1000, which represents VoIP services or video services.

Wherein, the corresponding relationship between the first VLAN Tag and the second VLAN Tag can be configured through command-line, network manager or other configuration methods, or can be a fixed strategy implemented by hardware or software.

Step 406: encapsulate the obtained second VLAN Tag into the received packet.

Step 407: forward the packet carrying the second VLAN Tag to the network device in the backbone network. During this procedure, the packet can also be processed according to packet transmission strategies. And the current procedure is ended.

Wherein, the packet transmission strategies include diversified security inspections and bandwidth control strategies.

Step 408: end the current procedure.

The convergence switch can process each packet it receives according to the steps shown in Figure 4.

Since a second VLAN Tag is carried in the packet forwarded to the network device in the backbone network by the convergence switch, and the second VLAN Tag in the packet can identify the service type of the packet, the network device in the backbone network can process the packet according to the service feature of the packet. For example, if the service feature is the service priority, then the network device in the backbone network can first process the packets with higher priorities, which satisfies different requirement of users with different priorities.

In the present invention, except for encapsulating a service feature into the packet according to the physical feature of the packet, it is also possible to set corresponding relationships between the physical feature and at least one physical feature and/or at least one service feature according to the requirement of the practical circumstances. After the packet is received, at least one physical feature and/or at least one service feature are (is) encapsulated into the packet according to the corresponding relationships. Therefore, the packet can carry more information.

After the packet encapsulated with at least one physical feature and/or at least one service feature is received, the encapsulated at least one physical feature and/or at least one service feature are (is) removed, and the packet is forwarded.

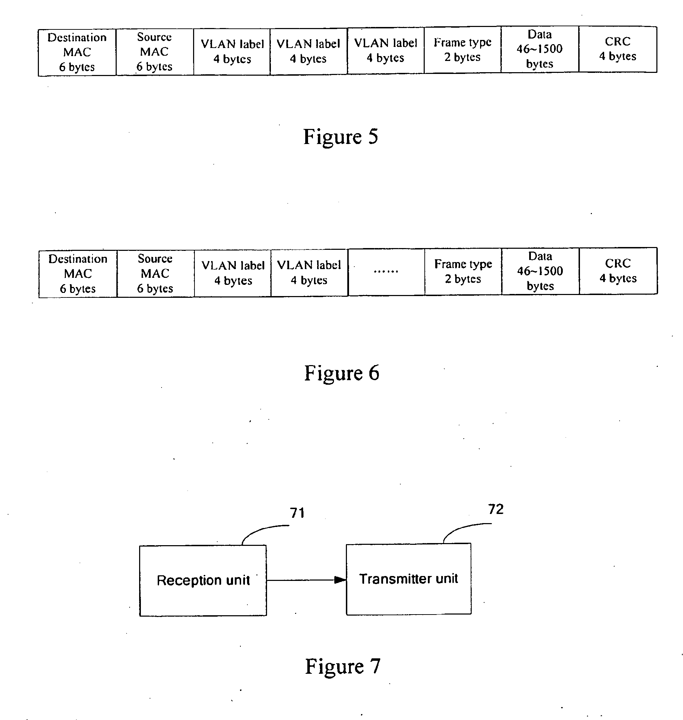

Correspondingly, in the above embodiment; the QinQ technique can only support two VLAN Tags. Therefore, in order to carry more physical and/or service features, more VLAN Tags can be set into the packet, the number of the VLAN tags is equal to the number of the physical and/or service features to be encapsulated into the packet. According to the number of the physical and/or service features encapsulated in the packet, the number of the VLAN Tag can be three, four, or more. The format of the added VLAN Tag is the same as that of the original VLAN Tag in the packet. Figure 5 is a diagram illustrating a frame structure of a packet with three VLAN Tags. Figure 6 is a diagram illustrating a frame structure of a packet with multiple VLAN Tags. In addition, other information can also be carried in the packet by the additionally set VLAN Tags. And the number of the VLAN Tags is not limited.

When the convergence switch receives the packet with multiple VLAN Tags from the network device in the backbone network, it only needs to remove the encapsulated VLAN Tags layer by layer to finish the de-encapsulation, and then forwards the packet to the user access device.

In addition, an embodiment of the invention provides a packet forwarding apparatus corresponding to the packet forwarding method. The structure of the apparatus is shown in Figure 7, which includes a reception unit 71 and a transmitter unit 72.

The reception unit 71, used for receiving a packet and obtaining a physical feature of the packet; and obtaining a service feature of the packet according to the obtained physical feature; and encapsulating the service feature of the packet into the packet;
the transmitter unit 72, used for transmitting a packet that has been encapsulated with a service feature.

Wherein, the reception unit 71 further includes a unit used for encapsulating at least one physical feature and/or at least one service feature into the packet. Accordingly, the transmitter unit 72 further includes a unit used for transmitting a packet containing at least one physical feature and/or at least one service feature.

When the apparatus needs to de-encapsulate a packet which has been encapsulated with at least one physical feature and/or at least one service feature, the reception unit 71 further includes a unit used for receiving a packet containing at least one physical feature and/or at least one service feature, and removing the at least one physical feature and/or at least one service feature contained in the packet. Accordingly, the transmitter unit 72 further includes a unit used for transmitting a packet whose physical feature and/or service feature have (has) been removed by the reception unit 71;
or, the transmitter unit 72 further includes a unit used for receiving a packet containing at least one physical feature and/or at least one service feature, and removing the at least one physical feature and/or at least one service feature contained in the packet. The reception unit 71 further includes a unit used for transmitting a packet whose physical feature and/or service feature have (has) been removed by the transmitter unit.

The foregoing embodiments are only the preferred embodiments of the present invention, which are not used to confine the protection scope of the present invention. Any changes and modifications maybe made by those skilled in the art without departing from this invention and therefore should be protected by the protection scope of this invention as set by the appended claims.

## Claims

1. A method for forwarding a packet based on QinQ technique, comprising:
configuring a corresponding relationship between a physical feature and a service feature of a packet;
receiving (301, 401) the packet encapsulated with the physical feature, and obtaining (301, 404) the physical feature of the packet;
finding (302) the corresponding relationship between the physical feature and the service feature according to the obtained physical feature, and obtaining the service feature of the packet;
encapsulating (303, 406) the service feature of the packet into the packet, and forwarding (303, 407) the packet encapsulated with the physical feature and the service feature according to the QinQ technique,
wherein the physical feature of the packet is taken as a first Virtual Local Area Network, VLAN, tag of the packet, and the service feature of the packet is taken as a second VLAN tag of the packet; the service feature comprises one of service type of the packet and service priority of the packet.

2. The method according to Claim 1, wherein the corresponding relationship between the physical feature and the service feature comprises: a corresponding relationship between the priority of the service to which the packet belongs and the first VLAN Tag; or a corresponding relationship between the type of the service to which the packet belongs and the first VLAN Tag.

3. The method according to Claim 1, further comprising:
when receiving the packet encapsulated with the service feature, removing the encapsulated service feature, and forwarding the packet.

4. The method according to Claim 1 or 3, wherein the packet is an Ethernet packet;
the method further comprising:
before the step of obtaining the physical feature of the packet, determining (403) whether a VLAN stack function is supported, if the VLAN stack function is supported, executing (404) the step of obtaining the physical feature of the packet.

5. The method according to Claim 1, wherein the packet is received by a convergence switch.

6. An apparatus for forwarding a packet based on QinQ technique, comprising: a receiving unit (71) and a transmitting unit (72); wherein,
the receiving unit (71) is configured for receiving a packet encapsulated with a physical feature and obtaining the physical feature of the packet, and obtaining a service feature of the packet according to a corresponding relationship between the physical feature and the service feature of the packet,
the receiving unit (71) is further configured for encapsulating the service feature of the packets into the packet, wherein the physical feature of the packet is taken as a first Virtual Local Area Network, VLAN, tag of the packet, and the service feature of the packet is taken as a second VLAN tag of the packet; the service feature comprises one of service type of the packet and service priority of the packet; and
the transmitting unit (72) is configured for transmitting the packet encapsulated with the physical feature and the service feature according to the QinQ technique.

7. The apparatus according to Claim 6, wherein the receiving unit (71) further comprises a unit configured for removing the service feature contained in the packet;
the transmitting unit (72) further comprises a unit configured for transmitting the packet whose service feature has been removed by the receiving unit (71).

8. The apparatus according to claim 6, wherein the transmitting unit (72) further comprises a unit configured for removing the service feature contained in the packet; and
the receiving unit (71) further comprises a unit configured for transmitting the packet whose service feature has been removed by the transmitting unit (72).

## Patentansprüche

1. Verfahren zur Weiterleitung eines Pakets auf Basis einer QinQ-Technik, das Folgendes umfasst:
Konfigurieren einer entsprechenden Beziehung zwischen einem physischen Merkmal und einem Dienstmerkmal eines Pakets;
Empfangen (301, 401) des Pakets gekapselt mit dem physischen Merkmal und Erhalten (301, 404) des physischen Merkmals des Pakets;
Finden (302) der entsprechenden Beziehung zwischen dem physischen Merkmal und dem Dienstmerkmal gemäß dem erhaltenen physischen Merkmal und Erhalten des Dienstmerkmals des Pakets;
Kapseln (303, 406) des Dienstmerkmals des Pakets in das Paket und Weiterleiten (303, 407) des mit dem physischen Merkmal gekapselten Pakets und des Dienstmerkmals gemäß der QinQ-Technik,
wobei das physische Merkmal des Pakets als ein erstes VLAN-Tag (Virtual Local Area Network) des Pakets angenommen wird und das Dienstmerkmal des Pakets als ein zweites VLAN-Tag des Pakets angenommen wird; wobei das Dienstmerkmal eine Dienstart des Pakets oder eine Dienstpriorität des Pakets umfasst.

2. Verfahren nach Anspruch 1, wobei die entsprechende Beziehung zwischen dem physischen Merkmal und dem Dienstmerkmal Folgendes umfasst: eine entsprechende Beziehung zwischen der Priorität des Dienstes, zu dem das Paket gehört, und dem ersten VLAN-Tag; oder eine entsprechende Beziehung zwischen der Art des Dienstes, zu dem das Paket gehört, und dem ersten VLAN-Tag.

3. Verfahren nach Anspruch 1, das weiterhin Folgendes umfasst:
Entfernen des gekapselten Dienstmerkmals beim Emfangen des mit dem Dienstmerkmal gekapselten Pakets und Weiterleiten des Pakets.

4. Verfahren nach Anspruch 1 oder 3, wobei das Paket ein Ethernet-Paket ist;
wobei das Verfahren weiterhin Folgendes umfasst:
vor dem Schritt des Erhaltens des physischen Merkmals des Pakets, Bestimmen (403), ob eine VLAN-Stapelfunktion unterstützt wird, falls die VLAN-Stapelfunktion unterstützt wird, Ausführen (404) des Schritts des Erhaltens des physischen Merkmals des Pakets.

5. Verfahren nach Anspruch 1, wobei das Paket von einem Konvergenz-Switch empfangen wird.

6. Vorrichtung zum Weiterleiten eines Pakets auf Basis einer QinQ-Technik, die Folgendes umfasst: eine Empfangseinheit (71) und eine Sendeeinheit (72); wobei die Empfangseinheit (71) konfiguriert ist zum Empfangen eines mit einem physischen Merkmal gekapselten Pakets und Erhalten des physischen Merkmals des Pakets und Erhalten eines Dienstmerkmals des Pakets gemäß einer entsprechenden Beziehung zwischen dem physischen Merkmal und dem Dienstmerkmal des Pakets,
die Empfangseinheit (71) weiterhin konfiguriert ist zum Kapseln des Dienstmerkmals der Pakete in das Paket, wobei das physische Merkmal des Pakets als ein erstes VLAN-Tag (Virtual Local Area Network) des Pakets angenommen wird und das Dienstmerkmal des Pakets als ein zweites VLAN-Tag des Pakets angenommen wird; wobei das Dienstmerkmal die Dienstart des Pakets oder die Dienstpriorität des Pakets umfasst; und
die Sendeeinheit (72) konfiguriert ist zum Senden des mit dem physischen Merkmal und dem Dienstmerkmal gekapselten Pakets gemäß der QinQ-Technik.

7. Vorrichtung nach Anspruch 6, wobei die Empfangseinheit (71) weiterhin eine Einheit umfasst, die konfiguriert ist zum Entfernen des in dem Paket enthaltenen Dienstmerkmals;
die Sendeeinheit (72) weiterhin eine Einheit umfasst, die konfiguriert ist zum Senden des Pakets, dessen Dienstmerkmal von der Empfangseinheit (71) entfernt worden ist.

8. Vorrichtung nach Anspruch 6, wobei die Sendeeinheit (72) weiterhin eine Einheit umfasst, die konfiguriert ist zum Entfernen des in dem Paket enthaltenen Dienstmerkmals; und
die Empfangseinheit (71) weiterhin eine Einheit umfasst, die konfiguriert ist zum Senden des Pakets, dessen Dienstmerkmal von der Sendeeinheit (72) entfernt worden ist.

## Revendications

1. Procédé d'acheminement de paquet basé sur la technique QinQ, comprenant :
la configuration d'une relation correspondante entre une caractéristique physique et une caractéristique de service d'un paquet ;
la réception (301, 401) du paquet encapsulé avec la caractéristique physique, et l'obtention (301, 304) de la caractéristique physique du paquet ;
l'obtention (302) de la relation correspondante entre la caractéristique physique et la caractéristique de service en fonction de la caractéristique physique obtenue, et l'obtention de la caractéristique de service du paquet ;
l'encapsulage (303, 406) de la caractéristique de service du paquet dans le paquet, et l'acheminement (303, 407) du paquet encapsulé avec la caractéristique physique et la caractéristique de service selon la technique QinQ,
dans lequel la caractéristique physique du paquet est utilisée comme première étiquette de Réseau Local Virtuel, VLAN, du paquet, et la caractéristique de service du paquet est utilisée comme seconde étiquette VLAN du paquet; la caractéristique de service comprenant l'un du type de service du paquet et de la priorité de service du paquet.

2. Procédé selon la revendication 1, dans lequel la relation correspondante entre la caractéristique physique et la caractéristique de service comprend une relation correspondante entre la priorité du service auquel appartient le paquet et la première étiquette VLAN; ou une relation correspondante entre le type du service auquel appartient le paquet et la première étiquette VLAN.

3. Procédé selon la revendication 1, comprenant en outre :
à la réception du paquet encapsulé avec la caractéristique de service, l'extraction de la caractéristique de service encapsulée et l'acheminement du paquet.

4. Procédé selon la revendication 1 ou 3, dans lequel le paquet est un paquet Ethernet ;
le procédé comprenant en outre :
avant l'étape d'obtention de la caractéristique physique du paquet, l'étape consistant à déterminer (403) si une fonction de pile VLAN est supportée ou non, si la fonction de pile VLAN est supportée, l'exécution (404) de l'étape d'obtention de la caractéristique physique du paquet.

5. Procédé selon la revendication 1, dans lequel le paquet est reçu par un commutateur de convergence.

6. Appareil d'acheminement d'un paquet basé sur la technique QinQ, comprenant : une unité de réception (71) et une unité de transmission (72) ; dans lequel,
l'unité de réception (71) est configurée pour recevoir un paquet encapsulé avec une caractéristique physique et obtenir la caractéristique physique du paquet, et obtenir une caractéristique de service du paquet en fonction d'une relation correspondante entre la caractéristique physique et la caractéristique de service du paquet,
l'unité de réception (71) est configurée en outre pour encapsuler la caractéristique de service des paquets dans le paquet, la caractéristique physique du paquet étant utilisée comme première étiquette de Réseau Local Virtuel, VLAN, du paquet, et la caractéristique de service du paquet étant utilisée comme seconde étiquette VLAN du paquet; la caractéristique de service comprenant l'un du type de service du paquet et de la priorité de service du paquet; et
l'unité de transmission (72) est configurée pour transmettre le paquet encapsulé avec la caractéristique physique et la caractéristique de service selon la technique QinQ.

7. Appareil selon la revendication 6, dans lequel l'unité de réception (71) comprend en outre une unité configurée pour extraire la caractéristique de service contenue dans le paquet ;
l'unité de transmission (72) comprend en outre une unité configurée pour transmettre le paquet dont la caractéristique de service a été extraite par l'unité de réception (71).

8. Appareil selon la revendication 6, dans lequel l'unité de transmission (72) comprend en outre une unité configurée pour extraire la caractéristique de service contenue dans le paquet; et
l'unité de réception (71) comprend en outre une unité configurée pour transmettre le paquet dont la caractéristique de service a été extraite par l'unité de transmission (72).
